(19) Europäisches Patentamt
European Patent Office
Office européen des brevets

(11) Publication number: **0 598 310 A1**

# (12) EUROPEAN PATENT APPLICATION

(21) Application number: **93118129.1**

(22) Date of filing: **09.11.93**

(51) Int. Cl.[5]: **C08K 13/02**, C08K 9/04, C08L 57/08, //(C08K13/02,3:34, 5:09),(C08L57/08,101:08)

(30) Priority: **09.11.92 JP 297505/92**
**06.10.93 JP 250514/93**

(43) Date of publication of application:
**25.05.94 Bulletin 94/21**

(84) Designated Contracting States:
**AT BE CH DE DK ES FR GB GR IE IT LI LU MC NL PT SE**

(71) Applicant: **SHOWA KAKO KABUSHIKI KAISHA**
**565 Tohori**
**Himeji-shi, Hyogo-ken(JP)**

(72) Inventor: **Fujii, Kiyotoshi**
**34-22, Tadera-higashi 2-chome**
**Himeji-shi, Hyogo-ken(JP)**

(74) Representative: **Weiss, Peter, Dr. rer. nat.**
**Patentanwalt,**
**Zeppelinstrasse 4**
**D-78234 Engen (DE)**

## (54) Hydrogen chloride scavenger and chlorine containing resin composition.

(57) A hydrogen chloride scavenger which does not occur discoloring like initial coloring, also not change its physical property, and can trap hydrogen chloride generated in burning of resin or in a fire in said resin when it is mixed with chlorine containing resin. A hydrogen chloride scavenger for mixing with resin for chemically scavenging hydrogen chloride generated in burning of chlorine containing resin in said resin, in which organic fatty acid having 6 to 24 carbon atoms and/or thermoplastic resin of 0.1 to 50 weight parts to said calcium silicate of 100 weight parts, holding carboxyl group as functional group in polymer is mixed with hydrate amorphous calcium silicate.

EP 0 598 310 A1

## BACKGROUND OF THE INVENTION

### 1. Field of the Invention

The present invention relates to a hydrogen chloride scavenger which can effectively scavenge hydrogen chloride generated at the combustion in the form of physically stable calcium chloride. More particularly, the present invention relates to a hydrogen chloride scavenger which does not affect physical property of chlorine containing resin, when blended with chlorine containing resin, and relates to a chlorine containing resin composition which is composed of a chlorine containing resin blended with said hydrogen chloride scavenger.

### 2. Brief Description of the Prior Art

In the prior art, chlorine containing resins, particularly polyvinyl chloride resin (PVC resin) as a representative example, may be widely used because both rigid PVC and non-rigid PVC resins have good processability and are economical. In particular, said PVC is neither easily corroded, nor easily deteriorated by chemicals or oil and climatic conditions, but it can be easily processed, and is economical; it is hardly combustible; it may be freely printed and colored clearly; and has a gloss; said PVC can be selected in trasparent, translucent type in accordance with applications, and is hygienic; thereby said polyvinyl chloride resin has a variety of applications.

However, recently, the advantage of polyvinyl chloride having fire retardance becomes defects in the boom of the emvironmental assessment. For example, the defects are getting deal of attention that PVC wall and floor materials used for rooms may generate black smoke and toxic gas in case of a fire; said hydrogen chloride generated at the combustion after disposal of PVC materials may cause air pollution and acid rain; an incinerator may be corroded by hydrogen chloride and its durability may decrease, and a large amount of black smoke may generate.

Calcium carbonate is a well known hydrogen chloride scavenger at the combustion of polyvinyl chloride, particularly that of a diameter of 1$\mu$ m or less, (Japanese Patent Laid Open No. 52-33140), however, there is a problem in its dispersibility and the scavenging efficiency to hydrogen chloride may be insufficient.

Although, attempts were made to improve the dispersibility of calcium carbonate by applying special processing such as surface processing, it was less efficient notwithstanding a desired amount of hydrogen chrolide scavenger was mixed with polyvinyl chrolide calculated stoichiometrically. When a large amount of fine particles of calcium carbonate are mixed, physical property of polyvinyl chloride changes and, particularly, rigid polyvinyl chloride becomes hard and fragile and is extremely deteriorated in trasparency. In paste polyvinyl chloride including a large amount of plastciizer, the viscosity increases extremely in paste condition so that the processability may decrease depending on the purpose. Moreover, there is a problem that non-rigid polyvinyl chloride may becomes rigid.

The other calcium compounds are capable of scavenging hydrogen chloride, but the scavenging efficiency is little because of low activity. Moreover, it is difficult to disperse these compounds into polyvinyl chloride resin. Calcium hydroxide ($Ca\ (OH)_2$) has high activity, but the stability of polyvinyl chloride resin decreases when blended with it.

Meanwhile, it is known that crystalline calcium silicate such as Xonotlite may scavenge hydrogen chloride generated at the combustion of polyvinyl chloride, (Reports of Osaka Industrial Technoloty Laboratory No. 362). However, when crystalline calcium silicate is used, the problems occur not only in initial coloring, high filling, impact resistance, but also in ability of scavenging hydrogen chloride.

The inventors made studies of finding a preferable hydrogen chloride scavenger, and found that hydrate amorphous calcium silicate has not only high scavenging ability of hydrogen chloride, but also has high filling, and the problems of initial coloring and deterioration of physical property in the paste process will be dissolved by using it in combination with organic fatty acid having carbon number of 6 to 24 and/or with thermoplastic resin holding carboxyl group as functional group in polymer, moreover, initial coloring and deterioration of physical property of polyvinyl chloride can be prevented by using hydrate amorphous calcium silicate applied by the surface treating with a titanate coupling agent.

The present invention is achieved in view of such prior art and facts. The present invetion has an objective to provide a hydrogen chloride scavenger which can be largely mixed with polyvinyl chloride does not occur initial coloring, does not affect physical property of non-rigid or rigid PVC in case of mixing with chloride containing resin, particularly, in case of the paste process, stabilized its viscosity, and may effectively scavenge hydrogen chloride generated at the combustion, and to provide a chlorine containing

resin composition formed by mixing said hydrogen chloride scavenger with chlorine containing resin.

SUMMARY OF THE INVENTION

A hydrogen chloride scavenger provided by the present invention is a composition described in (1) to (3) as follows:

(1) A hydrogen chloride scavenger for mixing with chlorine containing resin to scavenge chemically hydrogen chloride within said resin generated at the combustion of said resin, comprising hydrate amorphous calcium silicate mixed with organic fatty acid having carbon numbers of 6 to 24 and/or thermoplastic resin holding carboxyl group as functional group within said resin in an amount of from 0.1 to 50 against said calcium silicate of 100 weight to weight.

(2) A hydrogen chloride scavenger for mixing with chlorine containing resin to scavenge chemically hydrogen chloride within said resin generated at the combustion of said resin, comprising hydrate amorphous calcium silicate applied the surface treating with a coupling agent mixed with organic fatty acid having carbon numbers of 6 to 24 and/or thermoplastic resin holding carboxyl group as functional group within said resin in an amount of from 0.1 to 50 against said calcium silicate of 100 weight to weight.

(3) A hydrogen chloride scavenger for mixing with chlorine containing resin to scavenge chemically hydrogen chloride within said resin generated at the combustion of said resin, comprising hydrate calcium silicate applied the surface treatment with a titanate coupling agent mixed with organic fatty acid having carbon numbers of 6 to 24 and/or thermoplastic resin holding carboxyl group as functional group within said resin in an amount of from 0.1 to 50 against said calcium silicate of 100 weight to weight.

A chlorine containing resin composition provided by the present invention is composed of a hydrogen chloride scavenger (1), (2) and (3) described above mixed with chlorine containing resin.

Synthetic calcium silicate used in the present invetnion is amorphous, containing hydrate, and its general formula is as follows;

$$x CaO \cdot y SiO_2 \cdot z H_2O \ (x/y = 1 - 2, z>0)$$

Synthetic calcium silicate is, for example, produced in autoclave by hydrothermal reaction as follows:

```
Ca(OH)2+SiO2+H2O->C-S-H (II)->C-S-H(1.5)->C-S-H(I)
                     80 to 100°C        100 to 150°C
->Tobermorite (5C·6S·5H)->Xonotlite (6C·6S· ,H)
   150 to 200°C              200 to 250°C
```

provided

C:CaO, S:$SiO_2$, and H:$H_2O$

and the indicated temperatures are those of each reaction.

Hydrate amorphous calcium silicate being formed below 150°C (general name: C-S-H) is used as synthetic calcium silicate used in the present invention. Chlorine containing resin is not limited to polyvinyl chloride homopolymer, but includes block copolymer, graft copolymer, polymer blend mainly comprising vinyl chloride resin. As comonomers copolymerized with vinyl chloride, there are vinyl acetate, vinylidene chloride, acrylic acid, methacrylic acid, the other esters, acrylonitriles, olefin: such as ethylene and propylene, maleic acid, and anhydride. These chlorine containing resins are used individually or as mixture of more than two. Polyvinylidene chloride is also composed of homopolymer, block copolymer, graft copolymer, and polymer blend, furthermore, chlorinated polyethylene, and chlorinated polyvinyl chloride as same as polyvinyl chloride resin.

When hydrate amorphous calcium silicate is mixed with polyvinyl chloride, discoloring such as initial coloring may occur because of high activity of said calcium silicate, and can affect a thickner in the paste process.

For example, in case of the paste process viscosity changes and decreases with the lapse of time by adding hydrate amorphous calcium silicate. However, viscosity is stable by mixing organic fatty acid,

particularly viscous property may be maintained when dip molding is needed.

Particularly with inorganic filler only, resin becomes hard and fragile. However with mixing organic fatty acid, 100 % modulus does not increase, friction between the polymers in molten resin moderately decreases, increase of viscosty being restrained, and fluidity is enhanced. In the process with a molding machine, friction of a contacted metallic face decreases, thus preventing the adhesion to metallic face, that is, both inner smothness and outer smoothness are improved.

Organic fatty acids applied hereinabove are those having carbon numbers of 6 to 24, saturated, unsaturated, linear-chain, branch-chain, and also those having hydroxy group (-OH) as functinal group. Thermoplastic resin holding carboxyl group as functional group in polymer are those particularly thermoplastic copolymer having carboxyl group copolymerized with propylene, butene and butadiene for having thermal plasticity such as ethylene-acrylic acid copolymer, ethylene-metacrylic acid copolymer.

When hydrate amorphous calcium silicate is surface treated with a coupling agent, and is used as a scavenger, increase of paste viscosity is prevented and will be stablized with the lapse of time. Such coupling agents are, a silane coupling agent, a titanate coupling agent, an aluminum coupling agent, a zirconium coupling agent. A preferred coupling agent is a titanate coupling agent which may be employed in polyvinyl chloride mixed with treated hydrate amorphous calcium silicate, and if it is mixed extensively, the physical of polyvinyl chloride may not deteriorate in comparison with additive-free polyvinyl chloride. Particularly, non-rigid polyvinyl chloride resin shall not become so hard, hardness being not so changed, elongation being not decreased, and initial coloring in the process is little, thereby said coupling agent is preferable.

Such titanate coupling agents include, but limited to, isopropyl-tri-isostearoyl-titanate, and isopropyl-trioctanoyl-titanate, isopropyl-dimethacryl-isostearoyl-titanate, isopropyl-isostearoyl-diacryl-titanate, and isopropyl-tricumyl-phenyltitanate.

As mentioned hereinabove, titanate coupling agents are preferable ones for the surface treating of hydrate amorphous calcium silicate. Silane coupling agent has little reaction with the terminal group of polyvinyl chloride as matrix, thereby it may be effective for improving the dispersibility of hydrate amorphous calcium silicate. However, its compatibility is relatively low, the effect may be the same as in the case of filling of general inorganic filler. An aluminium coupling agent may be of effect for improving dispersibility, but has little effect for the surface treating to hydrate amorphous calcium silicate. Among them, titanate coupling agent has no reactivity in terminal group even in the case of most preferable one, however, its compatibility with any plasticizer mixed with non-rigid polyvinyl chloride is superior, therefore this coupling agent is effective for preventing the deterioration of physical property, improving the elongation, and avoiding to harden. When the surface treating of hydrate amorphous calcium silicate is applied with these coupling agent, it is preferable to add these coupling agent of 0.5 to 2% to calcium silicate weight to weight, and more preferably of about 1%.

In the present invention, mixture of hydrate amorphous calcium silicate and calcium carbonate having a diameter of less than 1 $\mu m$ in place of hydrate amorphous calcium silicate may be used. In this case, calcium carbonate of less than 100 parts weight to hydrate amorphous calcium silicate of 100 parts weight is mixed.

A hydrogen chloride scavenger in the present invention can be used in applications in which chloride containing resin is conventionally used. For example, at the extrusion molding, it may be used in pipe, hose, tube, rigid board, rigid corrugated plate, electric cord covering material, film, the other miscellaneous goods, which are made from polyvinyl chloride. In the calender molding, this invention is applied for non-rigid sheet, film, and leather. In the paste or slush molding, wall materials, floor materials, vinyl gloves, and toys. In the film, it can be processed by adhesion as welding process.

When these molded articles are incinated, the generation of harmful hydrogen chloride can be restrained in comparison with that made from conventional polyvinyl chloride, so that does not so affect the enviroment.

## DETAILED DESCRIPTION OF THE PREFERRED EMBODIMENTS

The embodiment of the present invention will be explained as follows.

(1) Determination of the effect of calcium silicate in the embodiment and comparative examples shown in table 1 is conducted as to each sheet specimen which is formed from hard polyvinyl chloride compound and soft polyvinyl chloride paste prepared by the method mentioned below; and as to the plate of hard polyvinyl chloride also preapred as mentioned below. In particular, viscosity is taken as a barometer for determining the effect of calcium silicate, and therefor soft polyvinyl chloride paste is prepared. In case of a test using only hard polyvinyl chloride, it is considered that reliability is low because the effect of

calcium silicate can be determined from only coloring.

1. Preparation of polyvinyl chloride paste DOP (di-2-ethylhexylphthalate) of 50 parts weight and DOA (dioctyl adipate) of 50 parts weight as plasticizer, silicic anhydride (general name; aerosil) of 0.5 parts weight as thickener, stabilizer of 3 parts weight, aromatic solvent (xylene, in this case) of 15 parts weight as diluent, to polyvinyl chloride (Geon-121 (P = 1600) resin, made by Nihon Geon Co. Ltd.,) of 100 parts weight, are mixed in a mixing agitator, and passed through three rolls. Finally, debubbling process is applied to obtain polyvinyl chloride paste. When a hydrogen chloride trapping agent is added, it is added together with said mixing agent and agitated, and polyvinyl chloride paste is formed by the same process.

2 Forming of soft polyvinyl chloride sheet Polyvinyl chloride paste formed by the above method is dropped on a flat glass board to uniformly smooth out by a coater. And it is kept in an oven at 180 °C for 10 minites, cooled at the room temperature, and peeled from the glass board to obtain soft polyvinyl chloride sheet.

3 Forming of hard polyvinyl chloride plate Polyvinyl chloride (SX-7GK (P = 750) resin, Sumitomo Kagaku Kougyou Ltd.) of 100 parts weight, and 5 parts weight in amount of stabilizer or lubricant are mixed in a blender, kneaded in a thermal roll at 180 °C for 7 minutes, and peeled from the surface of roll to cool. Using a thermal press machine, it is pressed at 190 °C for 7 minutes, the pressure is gradually applied until 100kg/$cm^2$, and held for 3 minutes as it is. Sequentially, after cooling to the room temperature, hard polyvinyl chloride plate is taken out and obtained. When a hydrogen chloride trapping agent is mixed, hard polyvinyl chloride plate can be obtained by processing mixture mixed with said mixture agent in the blender.

(2) Mixing amount of a hydrogen chloride trapping agent in the embodiment and comparative example is the stoichiometry calcurating amount for trapping about 50% of the amount of hydrogen chloride generated in burning of poluvinyl chloride.

(3) As to paste in the embodiment and comparative example, a change of viscosity is measured. Tensile strength, elongation, and 100% modulus are measured as property of non-rigid sheet specimen, and tensile strength, elongation and impact strength are measured as property of rigid sheet specimen. In the measurement of paste viscosity, a B-type viscometer and a rotor 3 are used (In another case, a rotor 4 is used). V6 and V12 are measured difference of the rotational frequency. Apparent viscosity (cps) is computed from each correction factor. The temperature of paste is fixed to 35 °C in the measuring condition. Measurement of the physical propertiy values of the sheet specimen is conducted by using a tensile test machine. JIS No.1 dumbbell (10 mm width, 40 mm in length in the parallel part) is formed as a specimen, with the chuck space of 40 mm. Tensile speed is 200mm/min for non-rigid polyvinyl chloride, and 50 mm/min for rigid polyvinyl chloride. The measurement of impact strength of rigid polyvinyl chloride is conducted on Izod impact test in accordance with JIS K-7110. No.2 specimen (64 mm in length, 5 mm in width, 12.7mm in thickness, 2.54 mm in cutting depth) is used.

(4) A generating amount of hydrogen chloride generated by burning of polyvinyl chloride in the embodiment and comparative example is conducted in accordance with the method of JIS K7217. Chloride concentration in water is measured by JIS K201 (titration method), in which a tublar electric furnace, a gas adsorption bottle and pump are connected with each other, a fixed amount of air is sent into the tublar electric furnace from the pump to heat polyvinyl chloride in the tublar electric furnace, generated hydrogen chloride gas is reacted and adsorbed with sodium hydroxide aqueous solution in the adsorption bottle. The measuring condition is as follows.

burning temperature: 500 °C
combustible hour: 30 minutes
amount of burning sample: about 0.5g
adsorption liquid: sodium hydroxide 0.5% aqueous solution
carrier gas: air

(5) A hydrogen chloride scavenger used in the embodiment and comparative example

In each embodiment and comparative example, a hydrogen chloride scavenger described as follows is used. Calcium silicate (amorphous, crystalline) and calcium carbonate used in the experiment is previously applied the dry processing at 100 °C for 15 minute with a henshel mixer.

Embodiment 1

A hydrogen chloride scavenger in which stearic acid of 3 parts weight is added to calcium silicate (C-S-H (1.5), hydrate amorphous) of 100 parts weight, the both are heated at about 80 °C, and uniformly mixed using the henschel mixer, and reduced to powder after cooling.

Embodiment 2

A hydrogen chloride scavenger in which a titanate coupling agent (isopropylstearoyltitanate) of 1 weight

% is added to calcium silicate (C-S-H (1.5)), applied the coupling treating with the henshel mixer at 60 ° C. Calcium silicate of 100 parts weight applied the coupling treatment and stealic acid of 3 parts weight are heated at about 80 ° C using the henshell mixer, mixed, and reduced to powder after cooling.

Embodiment 3

A hydrogen chloride scavenger in which a titanate coupling agent (isopropylisostearoyltitanate) of 1 weight % is add to calcium silicate (C-S-H (1.5)), and applied the coupling treatment using the henschel mixer at about 60 ° C. Calcium silicate of 100 parts weight applied the coupling treatment and ethylene-metacrylic acid copolymer resin (EMAA) of 3 parts weight are heated at about 110 ° C, mixed, and reduced to powder after cooling.

Comparative example 1

Calcium silicate (C-S-H(1.5)) is taken as a hydrogen chloride scavenger.

Comparative example 2

Heavy calcium carbonate (5 µm in average diameter) is taken as a hydrogen chloride scavenger.

Comparative example 3

The (blank) example in which a hydrogen chloride scavenger is not mixed.

Comparative example 4

Crystalline calcium silicate (Xonotlite) is taken as a hydrogen chloride scavenger.

Comparative example 5

Stealic acid of 3 parts weight is added to crystalline calcium silicate (Xonotlite) of 100 parts weight, the both are heated at about 80 ° C uniformly mixed using the henschel mixer, and reduced to powder after cooling.

Comparative example 6

A hydrogen chloride scavenger in which a titanate coupling agent (isopropylisostearoyltitanate) of 1 weight % is added to crystalline calcium silicate (Xonotlite), applied the coupling treatment using the henschel mixer at 60 ° C. Calcium silicate of 100 parts weight applied the coupling treatment and stealic acid of 3 parts weight are heated at about 80 ° C, mixed using the henschel mixer, and reduced to powder after cooling.

(6) Comparison of filling of moisture amorphous and crystall in calcium silicate

In the embodiment 2 and the comparative example 6, in case of paste polyvinyl chloride, a hydrogen chloride scavengers of 30, 50, 70, 90 parts weight are respectively added to polyvinyl chloride resin of 100 parts weight to adjust polyvinyl chloride paste and to measure viscosity and physical property. Preparation of paste is same as 1. Preparation of polyvinyl chloride paste, and 2. forming of soft polyvinyl chloride sheet. In the hard polyvinyl chloride compounds, in the embodiment 2 and the comparative example 6, a hydrogen chloride scavengers of 10, 30, 50, 70, 90 parts weight are respectively added to polyvinyl chloride resin of 100 parts weight. Preparation of compounds is same as 3. Forming of hard polyvinyl chloride plate, physical property of thermal press sheet (plate) is measured.

(7) Computation method of a rate of oil adsorption and a rate of scavenging hydrogen chloride generated in burning of polyvinyl chloride is as follows.

1 Measurement of oil adsorption: DOP (di-2-ethylhexylphtalate) as testing oil is dropped to calcium silicate of 100g, and is kneaded with a metallic knife to measure DOP weight until becoming rice cake-like.

2 Computation method of a rate of scavenging hydrogen chloride generated in burning of polyvinyl chloride: A value for reducing an actual measured value of hydrogen chloride generated from specimen of polyvinyl chloride to a value of 1g of specimen is polyvinyl chloride to a value of 1g of specimen is taken as a measured value (HCl generating amount/g of sample).

The incidence (%) of HCl generated from polyvinyl chloride resin in specimen is required from the measured value. The rate of scavenging is calculated using the following formula based on this incidence.

Formula 2 scavenging rate (%) = blank HCl incidence (%) - specimen HCl incidence (%) ÷ blank HCl incidence (%) X 100

Table 1

| Mixing rate of hydrogen chloride scavenger | | | |
|---|---|---|---|
| Experiment No. | Hydroen chloride trapping agent | Parts of mixing phr * | Kinds of chlorine containing resin |
| P - 1 | Embodiment 1 | 30 | soft (paste) PVC |
| P - 2 | Embodiment 2 | 30 | soft (paste) PVC |
| P - 3 | Embodiment 2 | 50 | soft (paste) PVC |
| P - 4 | Embodiment 2 | 70 | soft (paste) PVC |
| P - 5 | Embodiment 2 | 90 | soft (paste) PVC |
| P - 6 | comparative example 1 | 30 | soft (paste) PVC |
| P - 7 | comparative example 2 | 30 | soft (paste) PVC |
| P - 8 | comparative example 3 (blank) | 0 | soft (paste) PVC |
| P - 9 | comparative example 4 | 30 | soft (paste) PVC |
| P - 10 | comparative example 5 | 30 | soft (paste) PVC |
| P - 11 | comparative example 6 | 30 | soft (paste) PVC |
| P - 12 | comparative example 6 | 50 | soft (paste) PVC |
| P - 13 | comparative example 6 | 70 | soft (paste) PVC |
| P - 14 | comparative example 6 | 90 | soft (paste) PVC |
| S - 1 | Embodiment 2 | 10 | hard (suspension) PVC |
| S - 2 | Embodiment 2 | 30 | hard (suspension) PVC |
| S - 3 | Embodiment 2 | 50 | hard (suspension) PVC |
| S - 4 | Embodiment 2 | 70 | hard (suspension) PVC |
| S - 5 | Embodiment 2 | 90 | hard (suspension) PVC |
| S - 6 | Embodiment 3 | 30 | hard (suspension) PVC |
| S - 7 | comparative example 3 (blank) | 0 | hard (suspension) PVC |
| S - 8 | comparative example 1 | 30 | hard (suspension) PVC |
| S - 9 | comparative example 4 | 30 | hard (suspension) PVC |
| S - 10 | comparative example 6 | 10 | hard (suspension) PVC |
| S - 11 | comparative example 6 | 30 | hard (suspension) PVC |
| S - 12 | comparative example 6 | 50 | hard (suspension) PVC |
| S - 13 | comparative example 6 | 70 | hard (suspension) PVC |
| S - 14 | comparative example 6 | 90 | hard (suspension) PVC |
| Notes<br>P : code of paste polyvinylchloride (Paste-PVC)<br>S : code of hard polyvinyl chloride (Suspension-PVC) | | | |

* : parts with only hydrogen chloride scavenger

(8) Measurements
The measurements is shown in Table 2 to 8.

Table 2

Change of paste viscosity accoding to difference of the surface treating of hydrate amorphous calcium silicate

[unit : cps]

| Experiment No. | Immediately after preparation | | 1 day after | | 3 days after | | 7 days after | |
|---|---|---|---|---|---|---|---|---|
| | V 6 | V12 | V 6 | V12 | V 6 | V12 | V 6 | V12 |
| P - 1 | 8752 | 5304 | 7521 | 5362 | 7344 | 5406 | 7360 | 5421 |
| P - 2 | 4568 | 3338 | 4100 | 3029 | 4406 | 3335 | 4998 | 3805 |
| P - 6 | 10506 | 6018 | 7242 | 4590 | 5488 | 3927 | 2182 ~~2128~~ | 1866 |
| P - 7 | 8922 | 5345 | 6357 | 3872 | 6235 | 3866 | 5922 | 3831 |
| P - 8 | 5730 | 3520 | 5390 | 3440 | 5120 | 3430 | 5300 | 3620 |

Table 3

Comparison of physical property of sheet and the restraint of hydrogen chloride accroding to the difference of the surface treating of hydrate amorphous calcium silicate

| Experiment No. | Strength in breaking ($Kgf/cm^2$) | 100 % modulas ($Kgf/cm^2$) | Elongation (%) | Degree of coloring (strong, medium, weak ) | Genetaing amount of HCl (HCl mg/g of specimen) | HCl scavenging rate (%) |
|---|---|---|---|---|---|---|
| P -1 | 113.2 | 38.2 | 515 | weak | 110.0 | 52.4 |
| P -2 | 103.9 | 34.7 | 500 | weak | 120.0 | 48.1 |
| P -6 | 116.9 | 31.1 | 502 | strong | 122.0 | 47.2 |
| P -7 | 88.0 | 29.4 | 429 | none | 201.7 | 12.8 |
| P -8 | 114.5 | 30.7 | 624 | none | 265.3 | 0 |

Table 4

Change of paste viscosity in comparison with filling of crystralline and amorphous calcium silicate

[unit : cps ]

| Experiment No. *1 | Parts of mixing phr *2 | Immediately after the adjustment | | 1 day after | | 3 days after | |
|---|---|---|---|---|---|---|---|
| | | V 6 | V12 | V 6 | V12 | V 6 | V12 |
| P - 1 | 30 | 8752 | 5304 | 7521 | 5362 | 7344 | 5406 |
| P - 2 | 30 | 4568 | 3338 | 4100 | 3029 | 4406 | 3335 |
| P - 3 | 50 | 5386 | 3468 | 7344 | 5049 | 7528 | 5600 |
| P - 4 | 70 | 6079 | 4539 | 11750 | 8323 | 13831 | 9976 |
| P - 5 | 90 | 9486 | 6304 | 13015 | 8721 | 15600 | 10700 |
| P - 6 | 30 | 10506 | 6018 | 7242 | 4590 | 5488 | 3927 |
| P - 8 | 0 | 5730 | 3530 | 5390 | 3440 | 5120 | 3430 |
| P - 9 | 30 | 13076 | 7701 | 14586 | 8670 | 14708 | 8845 |
| P - 10 | 30 | 12362 | 8078 | 34400 | 21500 | 39600 | 25200 |
| P - 11 | 30 | 24000 | 14500 | 25000 | 15800 | 31100 | 19800 |
| P - 12 | 50 | 50100 | 29500 | 72500 | 44250 | 80600 | >50000 |
| P - 13 | 70 | 94800 | >50000 | >100000 | >50000 | >100000 | >50000 |
| P - 14 | 90 | impossible to measure due to not turn into paste. | | | | | |

*1 amorphous calcium silicate : p-1 to p-6
crystalline calcium silicate : p-8 to p-14

*2 parts weight with only hydrogen chloride scavenger

Table 5

| The measurement of oil adsorption | |
|---|---|
| | DOP oil adsorption (per 100g)[g] |
| crystalline calcium silicate | 395.0 |
| amorphous calcium silicate | 87.2 |

Table 6

Physical property value of soft polyvinyl chloride sheet of crystalline and amorphous calcium silicate

| Experiment No. | Parts of mixing phr * | Strength in breaking [Kgf/cm$^2$] | 100 % modulus [Kgf/cm$^2$] | Elongation (%) | Degree of coloring (strong, medium, weak) |
|---|---|---|---|---|---|
| P - 1 | 30 | 113.2 | 38.2 | 515 | weak |
| P - 2 | 30 | 103.9 | 34.7 | 500 | weak |
| P - 3 | 50 | 92.4 | 33.5 | 460 | weak |
| P - 4 | 70 | 83.1 | 33.9 | 449 | weak |
| P - 5 | 90 | 69.3 | 33.1 | 411 | weak |
| P - 6 | 30 | 116.9 | 31.1 | 502 | strong |
| P - 8 | 0 | 114.5 | 30.7 | 624 | none |
| P - 9 | 30 | 96.5 | 39.4 | 436 | medium |
| P - 10 | 30 | 85.4 | 34.8 | 438 | weak |
| P - 11 | 30 | 90.7 | 34.0 | 433 | weak |
| P - 12 | 50 | 67.2 | 33.0 | 377 | medium |
| P - 13 | 70 | 50.6 | 32.8 | 280 | medium |
| P - 14 | 90 | impossible to prepare sheet due to not turn into paste | | | |

* parts with only hydrogen chloride scavenger

Table 7

| Comparison of restraint of hydrogen chloride of soft polyvinyl chloride sheet mixed with crystalline and amorphous calcium silicate of 30 parts. | | | |
|---|---|---|---|
| Experiment No. * 1 | Parts of mixing phr * 2 | Genetaing amount of HCl (HCl mg/g specimen) | Scavenging rate of HCl (%) |
| P - 1 | 30 | 110.0 | 52.4 |
| P - 2 | 30 | 120.0 | 48.1 |
| P - 6 | 30 | 122.0 | 47.2 |
| P - 8 | 0 | 265.3 | 0 |
| P - 9 | 30 | 219.6 | 5.0 |
| P - 10 | 30 | 214.7 | 7.2 |
| P - 11 | 30 | 220.5 | 4.6 |

* 1 amorphous calcium silicate : p-1 to p-6 crystalline calcium silicate : p-8 to p-14
* 2 parts with only hydrogen chloride scavenger

Table 8

Comparison of physical property of hard polyvinyl chloride sheet (plate) mixed with crystalline and amorphous calcium silicate and the restraint of hydrogen chloride

| Experiment No. * 1 | Parts of mixing phr * 2 | Strength in breaking [Kgf/cm$^2$] | Impact strength [Kgf/cm$^3$] | Elongation (%) | Degree of coloring (strong, medium, weak-) | Genetaing amount of HCL (HCL mg/g of specimen) | HCl scavenging rate (%) |
|---|---|---|---|---|---|---|---|
| S -1 | 10 | 555 | 2.9 | 36 | none | 388.5 | 18.9 |
| S -2 | 30 | 547 | 3.1 | 36 | weak | 204.0 | 50.1 |
| S -3 | 50 | 509 | 3.2 | 28 | weak | 112.8 | 68.2 |
| S -4 | 70 | 478 | 3.0 | 25 | medium | 54.0 | 82.8 |
| S -5 | 90 | 448 | 3.2 | 25 | medium | 10.0 | 96.5 |
| S -6 | 30 | 444 | 3.1 | 25 | weak | 204.0 | 49.7 |
| S -8 | 30 | 555 | 2.9 | 34 | strong | 211.6 | 48.1 |
| S -7 | 0 | 583 | 2.9 | 27 | none | 524.9 | 0 |
| S -9 | 30 | 526 | 3.4 | 22 | medium | 436.4 | Δ 6.9 |
| S -10 | 10 | 549 | 3.0 | 32 | none | 466.5 | 2.7 |
| S -11 | 30 | 496 | 3.0 | 13 | weak | 413.9 | Δ 1.5 |
| S -12 | 50 | 442 | 3.0 | 6 | weak | 335.5 | 5.6 |
| S -13 | 70 | 333 | 2.6 | 5 | medium | 248.2 | 21.2 |
| S -14 | 90 | 375 | 2.2 | 4 | strong | 177.2 | 37.2 |

* 1 (1) In the table, a scavenging rate of S-9, S-11 is shown ^ (minus), it considered that measurment value is of uneven because a friction of Xonotlite in PCV is not enough.
(2) amorphous calcium silicate : S-1 to S-8 crystalline calcium silicate : S-9 to S-14
* 2 parts with only hydrogen chloride scavenger

As a result of Table 2, when hydrate amorphous calcium silicate is mixed (Experiment No. P-6) as it is, viscosity is not stable and changes with time (viscosity is high in mixing and extremely decreases with time), but with the surface treating with organic fatty acid (Experiment No. P-1, P-2), polyvinyl chloride paste holding viscosity having a tendency to the blank (Experiment No. 8) can be obtained. In mixing with calcium carbonate (Experiment No. P-7), viscosity of polyvinyl chloride paste is not so changed with time. It is considered that viscosity is not affected because of its low activity. Thus, hydrate amorphous calcium silicate is applied the surface treating with organic fatty acid, paste viscosity can maintain physical property of viscosity approximately near the blank.

As a result of Table 3, even if hydrate amorphous calcium silicate is mixed (Experiment No. P-1, P-2, P-6) strength is not so difference from the blank (Experiment No. P-8). In coloring, organic fatty acid, in this case mixture of stealic acid (Experiment No. P-1, P-2) has a little discoloring, while coloring is so large with only hydrate amorphous calcium silicate when organic fatty acid is not mixed. In the amount of hydrogen chloride straine, mixture of hydrate amorphous calcium silicate can scavenge the amount near the theoretical value. In case of calcium cabonite (Experiment No. P-7), there is no coloring, but a little of scavenging rate of hydrogen chloride. As described above, hydrate amorphous calcium silicate applied the surface treating with organic fatty acid has a little coloring and high effects of scavenging of hydrogen chloride.

Compared with filling of crystalline calcium silicate and amorphous calcium silicate, oil adsorption of crystalline calcium silicate has about 4.5 times of hydrate amorphous silica acid calcium as from table 5. In case of the paste adjustment in Table 4, the viscosity extremely increases according to the mixing amount, and also the adhesion increases, but is not plactical. In the hydrate amorphous calcium silicate, viscosity slightly increases with large mixing. In crystalline, the viscosity extremely increases with time, while in amorphous, with no process (Experiment No. P-6), viscosty decreases. When the surface treating is applied, viscosity increases same as the blank (experiment No. P-8), and shows stable viscosity. In this mixing example, the mixing of crystalline calcium silicate of 70 parts weight is limit. In hydrate amorphous calcium silicate, a large amount of mixing of more than 90 parts weight is possible. Thus, it is possible that hydrate amorphous calcium silicate is largely mixed according to a desired scavenging amount of hydrogen chloride, and it does not affect physical property and viscosity, and is superior in filling.

As from Table 6, crystalline calcium silicate is acicular crystalline, but in the paste process, the direction of crystalline can not be fixed, so that reinforceness (tensile strength) decreases, elongation decreases, the tendency to harden is shown. But, crystalline has a low degree of coloring in comparison with hydrate amorphous with that not applied with any processing (Experimant No. P-6, P-9). However, as from table 7, the scavenging amount of hydrogen chloride and theoretical value is extremely low. Thus, hydrate amorphous calcium silicate slightly affect physical property and has an effect of scavenging of hydrogen chloride in comparison with crystalline calcium silicate. Coloring can be restrained by applying with a specific processing.

As a result of Table 8, in the hard polyvinyl chloride sheet, when the process of the embodiment is applied, strength of breaking, decreasing of physical property of the elongation are little, impact strength increases even if hydrate amorphous calcium silicate is largely mixed in comparison with crystalline calcium silicate. Moreover, coloring is restrained, also the scavenging effect of hydrogen chloride is high, and filling is superior.

As the result described above, it is revealed that chlorine containing resin superior in filling and physical property of soft or hard chloride containing resin stability in paste, coloring of sheet or plate, and the scavenging effect of hydrogen chloride can be obtained when the process of embodiment is applied using hydrate amorphous calcium silicate.

As a result from Table 7 and 8, it is revealed that a chlorine containing resin compositon generated a little hydrogen chloride in burning and incinating, and a chlorine containing resin component restrained in a desired amount can be obtained by mixing a hydrogen chloride scavenging agent less than 150 parts weight to chloride containing resin of 100 parts weight.

A hydrogen chloride in the present invention is constituted described above, so that it can restrain from the generation of a large amount of hydrogen chloride or black smoke as conventionally and from a dripping phenomenon, that is, from fixing to a furnace wall of an incinerator after being welded in case of refusing and burning chlorine containing resin mixed with said hydrogen chloride scavenger, or of using in wall or floor materials for a room in a fire, and it can be processed as conventionally and hold its physical property without deteriorating processability and physical property as chlorine containing resin.

## Claims

1. A hydrogen chloride scavenger which is blended with synthetic resin for chemically scavenging hydrogen chloride generated at combustion of chlorine containing synthetic resin, said scavenger being an admixture comprising:
   0.1 to 50 weight parts of a thermoplastic resin containing an organic acid having between 6 and 24 carbon atoms and/or a functional group such as carboxyl group in each polymer unit; and
   100 weight parts of hydrate amorphous calcium silicate.

2. A hydrogen chloride scavenger which is blended with synthetic resin for chemically scavenging hydrogen chloride generated at combustion of chlorine containing synthetic resin, said scavenger being an admixture comprising:
   0.1 to 50 weight parts of a thermoplastic resin containing an organic acid having between 6 and 24 carbon atoms and/or a functional group such as carboxyl group in its polymer system; and
   100 weight parts of hydrate amorphous calcium silicate which is surface treated with a coupling agent.

3. A hydrogen chloride scavenger according to claim 2, wherein said hydrate amorphous calcium silicate is surface treated using a titanate family coupling agent.

4. A chlorine containing resin composition, wherein a hydrogen chloride scavenger defined in claim 1, 2 or 3 is blended with a chlorine containing synthetic resin.

5. A chlorine containing resin composition, wherein 150 or less than 150 weight parts of a hydrogen chloride scavenger defined in claim 1, 2 or 3 is blended with 100 weight parts of a chlorine containing synthetic resin.

European Patent Office

# EUROPEAN SEARCH REPORT

Application Number
EP 93 11 8129

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | DATABASE WPI<br>Derwent Publications Ltd., London, GB;<br>AN 82-50935E<br>& JP-A-57 076 057 (NIPPON CHEM IND) 12 May 1982<br>* abstract *<br>--- | 1,4,5 | C08K13/02<br>C08K9/04<br>C08L57/08<br>//(C08K13/02, 3:34,5:09), (C08L57/08, 101:08) |
| Y | FR-A-2 292 740 (SEKISUI KAGAKU KOGYO KABUSHIKI KAISHA)<br>* claims 1,2 *<br>--- | 1,4,5 | |
| Y | FR-A-2 117 672 (CINCINNATI MILACRON CHEMICALS INC.)<br>* claims 1-5 *<br>----- | 1,4,5 | |
| | | | TECHNICAL FIELDS SEARCHED (Int.Cl.5) |
| | | | C08K<br>C08L |

The present search report has been drawn up for all claims

| Place of search | Date of completion of the search | Examiner |
|---|---|---|
| THE HAGUE | 3 February 1994 | Siemens, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)